# EUROPEAN PATENT APPLICATION

(11) **EP 4 607 937 A1**
(43) Date of publication of application: **27.08.2025**
(21) Application number: 23898122.9
(22) Date of filing: 07.11.2023
(51) Int. Cl.: H04N 23/63, H04N 23/62, H04N 23/69, G06F 3/04842

(54) **ELECTRONIC DEVICE FOR DETERMINING IMAGE VIEW AREA AND OPERATION METHOD THEREFOR**

(30) Priority: 28.11.2022 KR 20220161299; 10.01.2023 KR 20230003536
(71) Applicant: Samsung Electronics Co., Ltd., Suwon-si, Gyeonggi-do 16677 (KR)
(72) Inventor: JEON, Jaehee, Suwon-si Gyeonggi-do 16677 (KR); OH, Yanggeun, Suwon-si Gyeonggi-do 16677 (KR); KIM, Bosung, Suwon-si Gyeonggi-do 16677 (KR); PARK, Jiyoon, Suwon-si Gyeonggi-do 16677 (KR)
(74) Representative: Gulde & Partner
(86) International application number: PCT/KR2023/017777
(87) International publication number: WO 2024/117590

(57) **Abstract**

An electronic device according to an embodiment disclosed in the present document may comprise a camera module, a display, at least one processor, and a memory. The at least one processor may: in response to identifying that an auto-framing function is activated while a camera application is running, identify a maximum view area provided by the camera module; acquire a first user input for designating a movable view area range within the maximum view area; acquire a second user input for designating an object area to be tracked within the view area range; determine a first view area including the object area on the basis of the first user input and the second user input; and display, on the display, an image corresponding to the determined first view area. Various other embodiments identified via the present document are also possible.

## Description

### [Technical Field]

Various embodiments disclosed in the present document relate to an electronic device for determining a view area of an image and an operation method therefor.

### [Background Art]

As carrying portable electronic devices has been generalized in our daily lives, the use of camera functions of portable electronic devices has increased significantly, and photographing with a portable electronic device is recognized as an indispensable function to the extent that the camera functions become a criterion for selecting a portable electronic device. Recently, as the camera functions implemented in portable electronic devices have been enhanced, auto-framing for automatically optimizing a photographing frame according to a subject and adjusting a composition has rapidly become a standard function of portable electronic devices. For example, when the auto-framing function is activated, an electronic device may detect subjects to photograph, and may provide an image by adjusting a photographing angle and/or a zoom according to the number, motions, or positions of detected subjects.

### [Disclosure of Invention]

### [Solution to Problem]

According to an embodiment disclosed in the present document, an electronic device may include: a camera module; a display; at least one processor operatively connected with the camera module and the display; and a memory operatively connected with the at least one processor. The at least one processor may identify a maximum view area that is provided by the camera module in response to identifying that an auto-framing function is activated while a camera application is being executed, may acquire a first user input for designating a view area range that is movable within the maximum view area, may acquire a second user input for designating an object area to track within the view area range, may determine a first view area including the object area based on the first user input and the second user input, and may display an image corresponding to the determined first view area on the display.

According to an embodiment disclosed in the present document, an operation method of an electronic device may include: identifying a maximum view area that is provided by a camera module of the electronic device in response to identifying that an auto-framing function is activated while a camera application is being executed; acquiring a first user input for designating a view area range that is movable within the maximum view area; acquiring a second user input for designating an object area to track within the view area range; determining a first view area comprising the object area based on the first user input and the second user input; and displaying an image corresponding to the determined first view area.

### [Brief Description of Drawings]

FIG. 1 is a block diagram of an electronic device in a network environment according to various embodiments.
FIG. 2 is a block diagram illustrating a camera module according to various embodiments.
FIG. 3 is a block diagram of an electronic device according to an embodiment.
FIGS. 4A, 4B, 4C, and 4D are views illustrating a method of determining a view area and displaying when an auto-framing function is activated according to an embodiment.
FIG. 5 is a flowchart illustrating an operation method of an electronic device according to an embodiment.
FIG. 6 is a flowchart to explain detailed operations of determining a view area range by an electronic device according to an embodiment.
FIG. 7 is a flowchart to explain detailed operations of determining an object area by an electronic device according to an embodiment.
FIG. 8 is a view to explain a method for providing an image corresponding to a view area determined based on an object area according to an embodiment.
FIG. 9 is a view to explain a method for providing an image corresponding to a view area determined based on an object area according to an embodiment.
FIG. 10 is a view to explain a method for providing an image corresponding to a view area determined based on an object area according to an embodiment.
FIG. 11 is a view to explain a method for providing an image corresponding to a view area determined based on a plurality of object areas according to an embodiment.

Regarding explanation of the drawings, the same or like reference numerals may be used to refer to the same or like components.

### [Mode for the Invention]

Hereinafter, various embodiments of the disclosure will be described with reference to the accompanying drawings. It should be appreciated that various embodiments are not intended to limit the disclosure to particular embodiments and include various modifications, equivalents, and/or alternatives of embodiments of the disclosure.

The auto-framing function of a camera may refer to a function of tracking a main subject positioned within a maximum view area that may be obtained by the camera, focusing on the main subject, and adjusting a photographing composition to continuously center the main subject in an image frame. When the auto-framing function is activated, the electronic device may automatically determine the photographing composition with reference to a subject recognized within the maximum view area of the camera. Accordingly, a moving range of a view area that is seen through the camera when the auto-framing function is activated may be fixed within the maximum view area of the camera regardless of a size or composition of the subject desired by the user. In addition, when a setting for tracking the subject during photographing is disabled, the electronic device may re-detect the subject based on the maximum view area of the camera and may re-configure the photographing composition, but in this process, the view area that is seen through the camera may be greatly changed, causing the user inconvenience.

In various embodiments of the disclosure, when the auto-framing function of a camera is used, a user may be allowed to designate a movable view area range within a maximum view area of the camera, and an area of a subject to track within the view area range, so that an image of a composition desired by the user may be provided. In various embodiments of the disclosure, an area range for detecting a subject within a maximum view area of the camera and an area to be designated as a subject may be recommended based on image analysis, and setting by the user may be induced, so that it is possible to take images that meet user's needs. In various embodiments of the disclosure, by tracking a subject and changing a view area based on a designated view area range within a maximum view area of the camera, unnecessary shift of a view area may be prevented, and calculation related to the auto-framing function may be rapidly and stably processed.

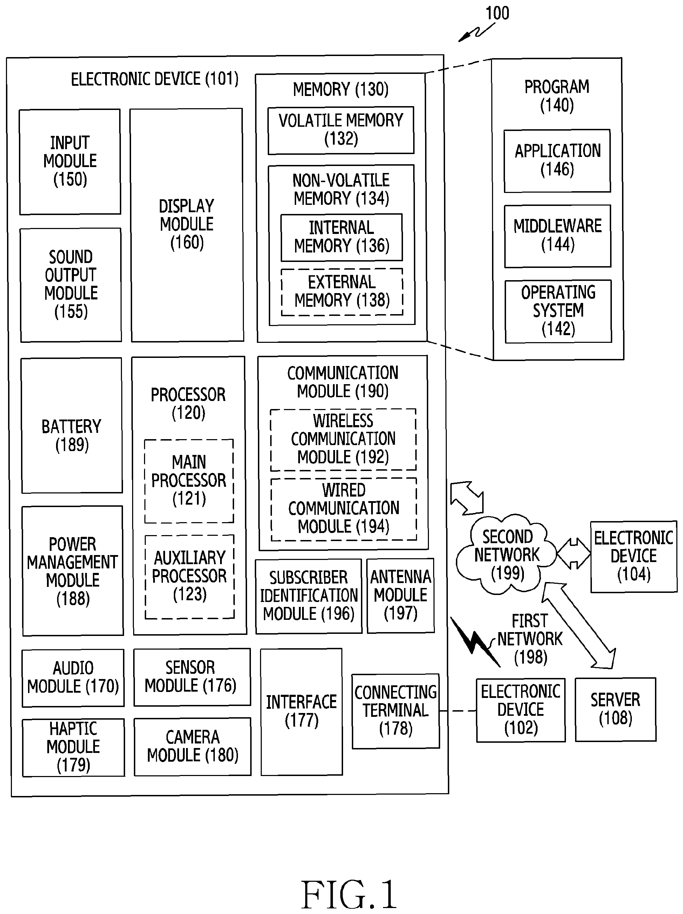

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

**The** wireless communication module 192 may support a 5G network, after a 4G network, and next-generation communication technology, e.g., new radio (NR) access technology. **The** NR access technology may support enhanced mobile broadband (eMBB), massive machine type communications (mMTC), or ultra-reliable and low-latency communications (URLLC). **The** wireless communication module 192 may support a high-frequency band (e.g., the mmWave band) to achieve, e.g., a high data transmission rate. **The** wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. **The** wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

**The** antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. **The** signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

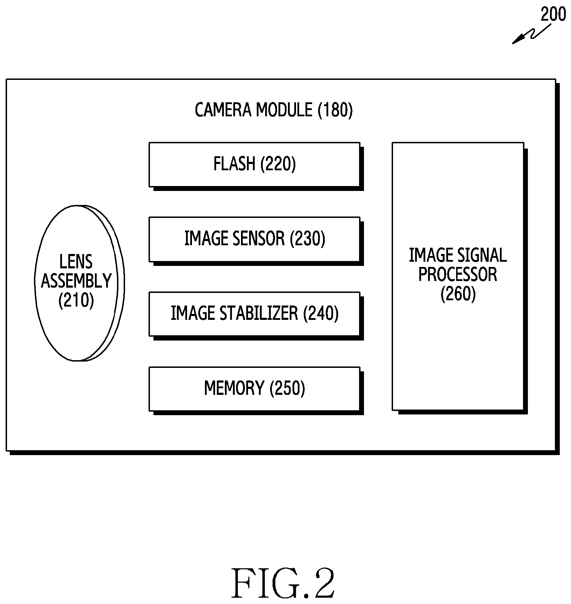

FIG. 2 is a block diagram 200 illustrating the camera module 180 according to various embodiments.

Referring to FIG. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

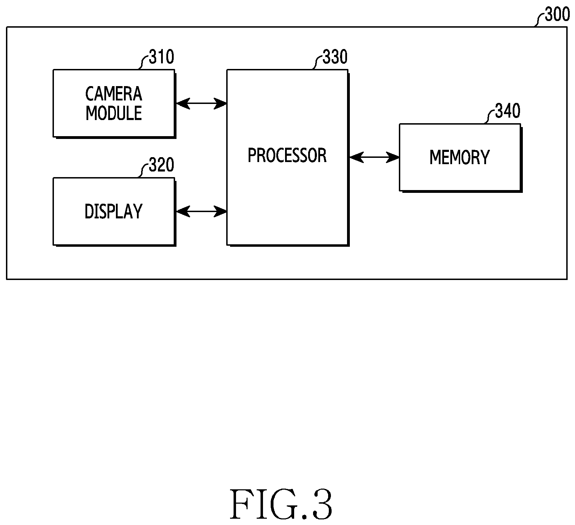

FIG. 3 is a block diagram of an electronic device 300 according to an embodiment. Referring to FIG. 3, the electronic device 300 may be a device that tracks a subject based on a view area range designated by a user within a maximum view area obtainable through a camera, and provides an image, and may include a camera module 310, a display 320, at least one processor 330, or a memory 340. The electronic device 300 in FIG. 3 may correspond to the electronic device 101 illustrated in FIG. 1.

In an embodiment, the camera module 310 (for example, the camera module 180 of FIG. 1) may shoot a subject according to an operation of a user. For example, the camera module 310 may acquire an image that includes the subject within a maximum view area obtainable by the camera module 310. In various embodiments of the disclosure, the view area may be an area that is seen by the camera module 310, and may correspond to a field of view. According to various embodiments, the electronic device 300 may include one or more cameras having different fields of view.

In an embodiment, the display 320 (for example, the display module 160 of FIG. 1) may display an image which is acquired by the camera module 310. For example, the display 320 may display an image corresponding to a view area that is set for the camera module 310.

In an embodiment, the display 320 may be configured by one or more of a liquid crystal display (LCD), a thin film transistor LCD (TFT-LCD), organic light emitting diodes (OLED), a light emitting diode (LED), an active matrix organic LED (AMOLED), a flexible display and a 3 dimensional display. In addition, some of these displays may be configured in a transparent type or a light transmission type to allow a user to see the outside therethrough. This may be configured in a transparent display type including a transparent OLED (TOLED).

In an embodiment, the memory 340 (for example, the memory 130 of FIG. 1) may store instructions that, when executed, control the at least one processor 330 (for example, the processor 120 of FIG. 1) to perform various operations. For example, the at least one processor 330 may perform operations of acquiring an image of a composition that is determined based on a view area range and an object area which are designated by the user when the auto-framing function of the camera is used.

In an embodiment, the at least one processor 330 may identify that the auto-framing function is activated while a camera application installed in the electronic device 300 is being executed. The at least one processor 330 may identify whether the auto-framing function is activated, based on configuration information on the camera module 310. According to various embodiments, the at least one processor 330 may display a preview image on the display 320, based on an initial zoom magnification of the camera module 310 when the camera application is executed. The initial zoom magnification of the camera module 310 may be a default zoom magnification (for example, 1.0 magnification) set by the camera application or a magnification predesignated by the user. The at least one processor 330 may maintain the default zoom magnification until a setting value related to a photographing composition is separately inputted by the user.

In an embodiment, when the at least one processor 330 identifies that the auto-framing function is activated, the at least one processor 330 may identify a maximum view area provided by the camera module 310. The maximum view area may correspond to a maximum field of view that may be provided through the camera module 310.

In an embodiment, the at least one processor 330 may acquire a first user input for designating a movable view area range within the maximum view area. The view area range may be understood as a range in which an object is detected within the maximum view area while photographing is being performed by using the camera module 310. The at least one processor 330 may detect and continuously track an object while moving within the view area range designated based on the first user input. According to various embodiments, the at least one processor 330 may recommend a view area range that may be designated within the maximum view area to the user. The at least one processor 330 may detect one or more objects from a plurality of continuous frames which are acquired for a designated time by using the camera module 310, and may determine a candidate view area range based on analysis on the one or more objects. For example, the at least one processor 330 may determine the candidate view area range based on at least one of the number, positions, motions, or directions of the one or more objects, and may display and recommend the determined candidate view area range on the display 320. In this case, the at least one processor 330 may determine the candidate view area range by applying a margin of a ratio that is designated with reference to an area and a direction in which the motion of the at least one object is detected. The margin may be applied differently according to characteristics of the at least one object detected within the maximum view area, and may be adjusted to maintain the photographing composition (for example, a photographing angle or a zoom magnification) set by the user within the maximum view area. According to various embodiments, when a plurality of objects are detected within the maximum view area, the at least one processor 330 may determine the candidate view area range with reference to a direction of an object that has active motion or high importance among the plurality of objects. In another example, the at least one processor 330 may determine the candidate view area range to include all of the plurality of objects when the identified degrees of motion or importance of the plurality of objects are within the same or similar range.

In an embodiment, the at least one processor 330 may induce the first user input to reflect a composition desired by the user when the auto-framing function is used. For example, the at least one processor 330 may provide a first user interface to designate at least part of the maximum view area as the view area range. The first user interface may have a window box shape to set (or change) a range in horizontal directions and/or vertical directions within the maximum view area. The at least one processor 330 may determine the view area range based on the first user input which is acquired through the first user interface. According to various embodiments, the at least one processor 330 may provide the first user interface based on the candidate view area range that is determined based on the analysis of the frame image. For example, the at least one processor 330 may arrange the first user interface on a position corresponding to the candidate area range. According to various embodiments, when it is identified that the view area range is not designated within the maximum view area by the user, the at least one processor 330 may automatically designate the candidate view area range determined based on the analysis of the frame image as the view area range.

In an embodiment, the at least one processor 330 may acquire a second user input for designating an object area to track within the view area range. The object area may be an area that includes a target object to be continuously tracked within the view area range, and may be designated to include a peripheral part of the object in addition to the face or upper body of the object. According to various embodiments, the at least one processor 330 may recommend an object area that may be designated within the view area range to the user. The at least one processor 330 may determine at least one candidate object area, based on information on one or more objects detected within the view area range, or user preference information. For example, the at least one processor 330 may determine, as a main object, an object that is designated by the user or an object that has a high frequency of appearance in images pre-stored in the memory 340, and may designate the at least one candidate object area with reference to the main object. In another example, the at least one processor 330 may determine the main object, based on a type or a position of each of the detected one or more objects. For example, the at least one processor 330 may determine a person between the person and the animal as the main object, and, when a plurality of persons are detected, may determine, as the main object, a person positioned at the front (that is, a person closer to the electronic device 300), or a person whose motion is continuously detected. The at least one processor 330 may designate the at least one candidate object area to include the determined main object.

In an embodiment, the at least one processor 330 may induce the second user input to reflect a composition of a subject desired by the user when the auto-framing function is used. For example, the at least one processor 330 may provide a second user interface for setting a boundary of the object area within the view area range. The second user interface may have a window box shape to set (or change) a range in horizontal directions and/or vertical directions with reference to the object detected within the view area range. The at least one processor 330 may determine the object area based on the second user input which is acquired through the second user interface. According to various embodiments, the at least one processor 330 may provide the second user interface based on the at least one candidate object area which is determined based on information on one or more objects within the view area range or user preference information. For example, the at least one processor 330 may arrange and provide the second user interface on a position corresponding to the at least one candidate object area. According to various embodiments, when it is identified that the object area is not designated within the view area range by the user, the at least one processor 330 may automatically designate the at least one candidate object area as the object area.

In an embodiment, the at least one processor 330 may determine a first view area to display on the display, based on the view area range which is designated by the first user input and the object area which is designated by the second user input. The at least one processor 330 may determine the first view area to include the object area within the view area range. According to various embodiments, the at least one processor 330 may determine the first view area by considering a zoom magnification on the object area. For example, the at least one processor 330 may calculate a minimum zoom magnification based on the size of the maximum view area and the size of the view area range. In this case, the at least one processor 330 may calculate the minimum zoom magnification by calculating a great value among values obtained by dividing the horizontal, vertical lengths of the maximum view area by the horizontal, vertical lengths of the view area range, and may determine the first view area to make the object area seen at a zoom magnification greater than or less than the calculated minimum zoom magnification. In another example, the at least one processor 330 may acquire a magnification setting input including at least one of a minimum zoom magnification or maximum zoom magnification from the user. In this case, the at least one processor 330 may determine the first view area to maintain the maximum zoom magnification or lower and/or the minimum zoom magnification or higher for the object area within the maximum view area based on the magnification setting input. According to various embodiments, when it is identified that a plurality of object areas are designated by the second user input, the at least one processor 330 may determine the first view area to include all of the plurality of object areas. In this case, the first view area may be determined to maintain the minimum zoom magnification for the plurality of object areas.

In an embodiment, the at least one processor 330 may display an image corresponding to the determined first view area on the display 320. The at least one processor 330 may provide the image corresponding to the first view area as a preview image of the running camera application, or may provide as a moving image screen.

In an embodiment, when it is identified that the object area is not included in the first view area while the image corresponding to the first view area is being provided through the display 320, the at least one processor 330 may detect the object area again within the view area range. The at least one processor 330 may change the first view area based on the detected object area, and may display an image corresponding to the changed first view area on the display 320.

In an embodiment, the at least one processor 330 may detect a third user input for changing the object area while providing the image corresponding to the first view area. In this case, the at least one processor 330 may determine a second view area based on the object area changed by the third user input, and may replace the image corresponding to the first view area with an image corresponding to the second view area and may provide the image through the display 320.

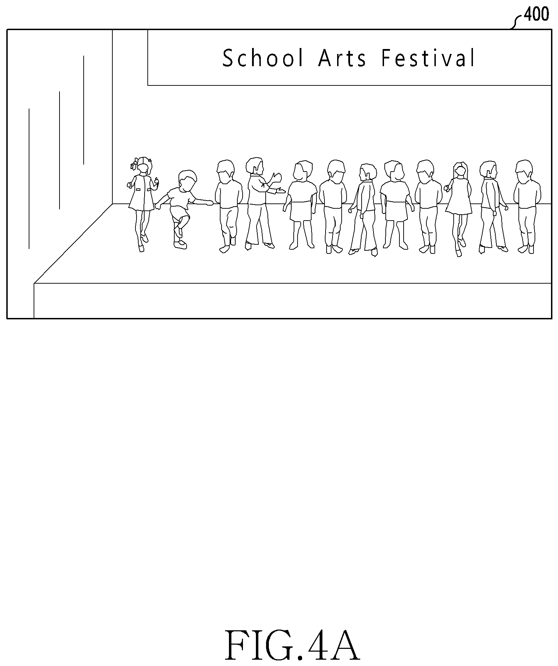

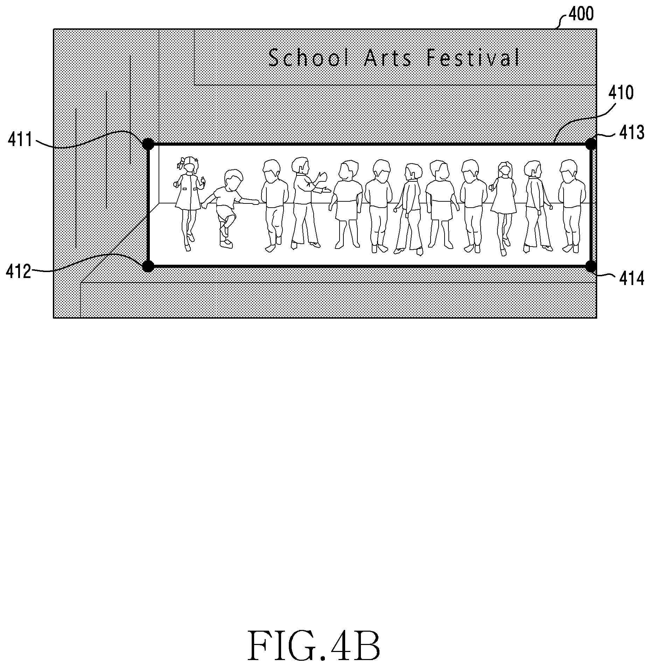

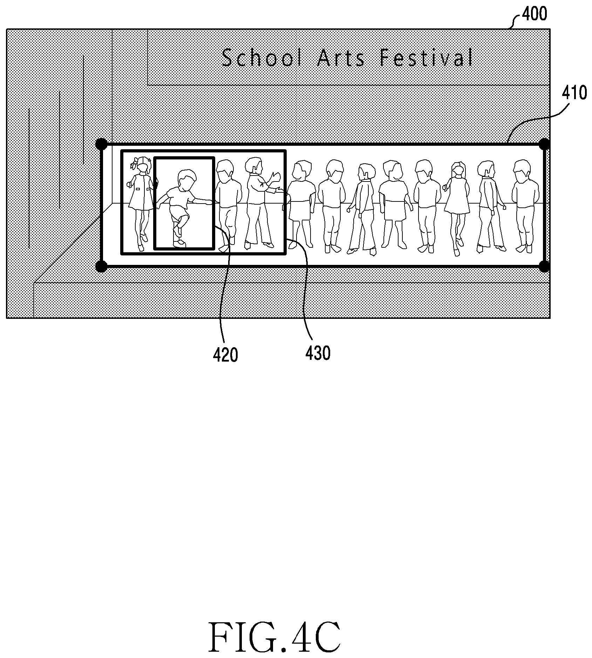

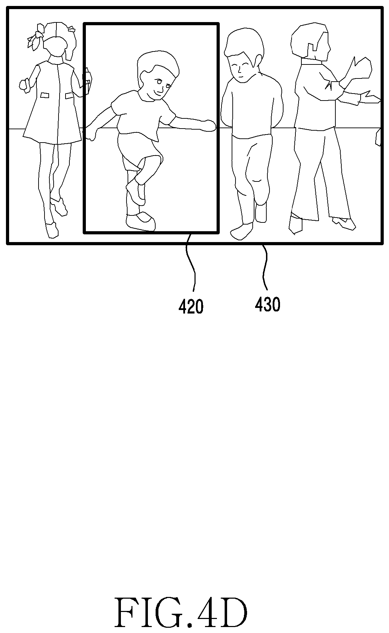

FIGS. 4A, 4B, 4C, and 4D are views to explain a method for determining and displaying a view area when an auto-focusing function is activated according to an embodiment. According to various embodiments, the electronic device 300 may provide an image based on a view area range and an object area which are designated by the user while photographing by using a camera module (for example, the camera module 180 of FIG. 1 or the camera module 310 of FIG. 3).

In FIG. 4A, when it is detected that the auto-framing function of the camera module 310 is activated, the electronic device 300 may identify a maximum view area 400 which may be provided through the camera module 310. The maximum view area 400 may be determined in response to a maximum field of view of the camera module 310.

In FIG. 4B, the electronic device 300 may designate a movable view area range 410 to detect and track at least one object within the maximum view area 400. The electronic device 300 may provide a user interface of a window box shape to designate the view area range 410. For example, the electronic device 300 may designate the view area range 410 with reference four corner points 411, 412, 413, 414 of the user interface which is set or moved by a user's touch input. Referring to FIG. 4B, an area within a boundary that is formed with reference to the upper left corner point 411, the lower left corner point 412, the upper right corner point 413, or the lower right corner point 414 of the user interface may be determined as the view area range 410.

According to various embodiments, the electronic device 300 may calculate the view area range 410 that may be designated within the maximum view area 400, and may recommend the same to the user. The electronic device 300 may analyze continuous frames which are obtained for a designated time, and may sort a background with a fixed position without movement, and objects with movement within the maximum view area 400, and may determine a candidate view area range by considering the number, positions, motions or directions of the objects. For example, when a plurality of objects are detected within the maximum view area 400, the electronic device 300 may determine the candidate view area range to include all of the plurality of objects. The electronic device 300 may recommend the determined candidate view area range as the view area range 410. In an embodiment, the electronic device 300 may determine the candidate view area range by applying a margin of a ratio that is designated with reference to an area and a direction in which motion of the object detected within the maximum view area 400 is detected. In this case, the electronic device 300 may apply a marge of a different ratio according to characteristics of the detected object. For example, when the detected object is a whole body of a specific person, the electronic device 300 may determine the candidate view area range to include a margin of 30% of the height of the whole body of the object in the upward direction, a margin of 10% of the height of the whole body in the downward direction, and a margin of 50% of the width of the whole body in the leftward and rightward directions, respectively. In another example, when a plurality of persons are detected as the object, the electronic device 300 may set different margins in the leftward/rightward/upward/downward directions according to motion areas and directions of the persons, and may determine the candidate view area range. According to various embodiments, in FIG. 4B, the electronic device 300 may provide a user interface for designating the view area range 410 based on the determined candidate view area range. In this case, the electronic device 300 may set a position corresponding to the candidate view area range to an initial position of the user interface for designating the view area range 410, and may display the user interface.

In FIG. 4C, the electronic device 300 may designate an object area 420 to track within the view area range. The electronic device 300 may provide a user interface of a window box shape to designate the object area 420. The user interface for designating the object area 420 may be provided in the same way as that the user interface for designating the view area range 410 is provided, and an area within a boundary in the leftward/rightward/upward/downward directions that is formed by a user's touch input may be determined as the object area 420.

According to various embodiments, the electronic device 300 may recommend the object area 420 that may be designated within the view area range to the user. The electronic device 300 may determine at least one candidate object area, based on information on one or more objects detected within the view area range 410, or user preference information. For example, when it is identified that there is an object that is designated by the user or there is an object that appears in images pre-stored in a memory (for example, the memory 130 of FIG. 1 or the memory 340 of FIG. 3) more than a designated number of times, the electronic device 300 may designate the at least one candidate object area with reference to the corresponding object. In another example, the electronic device 300 may designate the candidate object area by considering an object selection priority. The object selection priority may be determined according to a type or a position of each of the one or more objects detected within the view area range 410. The electronic device 300 may determine persons between persons and animals to have a relatively high priority, and, when a plurality of persons are detected, the electronic device 300 may determine a person positioned at the front to have a relatively high priority. The electronic device 300 may recommend the determined candidate object area as the object area 420. According to various embodiments, in FIG. 4C, the electronic device 300 may provide a user interface for designating the object area 420 based on the determined candidate object area. In this case, the electronic device 300 may set a position corresponding to the candidate object area to an initial position of the user interface for designating the object area 420, and may display the user interface. The object area 420 may be designated to include a peripheral part of the object in addition to the face or upper body of the object to track within the view area range.

In FIG. 4C, the electronic device 300 may determine a view area 430 that is seen through a display (for example, the display module 160 of FIG. 1 or the display 320 of FIG. 3) based on the designated view area range 410 and the designated object area 420. The electronic device 300 may determine the view area 430 to include the object area 420 within the view area range 410.

In FIG. 4D, the electronic device 300 may display an image corresponding to the determined view area 420 on the display 320. The image corresponding to the view area 430 may be provided as a preview image or a moving image screen while the camera module 310 is being executed. The electronic device 300 may be set to maintain a maximum zoom magnification for the object area 420 while providing the image corresponding to the view area 430. In an embodimet, the minimum zoom magnification may be calculated by using the size of the maximum view area 400 and the size of the view area range 410. For example, the electronic device 300 may determine, as the minimum zoom magnification of the view area 430, a great value among the value obtained by dividing the horizontal length or width of the maximum view area 400 by the horizontal length or width of the view area range 410, and the value obtained by dividing the vertical length or height of the maximum view area 400 by the vertical length or height of the view area range 410. In an embodiment, the electronic device 300 may set the zoom magnification of the view area 430 based on magnification configuration information inputted by the user. In this case, the electronic device 300 may identify a maximum zoom magnification and/or a minimum zoom magnification which is designated by the user based on the magnification configuration information, and may set the zoom magnification on the object area 420 within the view area 430 to be maintained less than or equal to the maximum zoom magnification and/or greater than or equal to the minimum zoom magnification.

According to various embodiments, the electronic device 300 may continuously track the object area 420 while providing the image corresponding to the view area 430. When it is identified that the object area 420 deviates from the view area 430, the electronic device 300 may detect the object area 420 within the view area range 410 again, and may change and display the view area 430 based on the detected object area 420.

According to various embodiments, the electronic device 300 may detect that the object area 420 is changed by a user's touch input while providing the image corresponding to the view area 430. The electronic device 300 may determine a new view area 430 based on the changed object area 420, and may provide an image corresponding to the new view area 430 on the display 320.

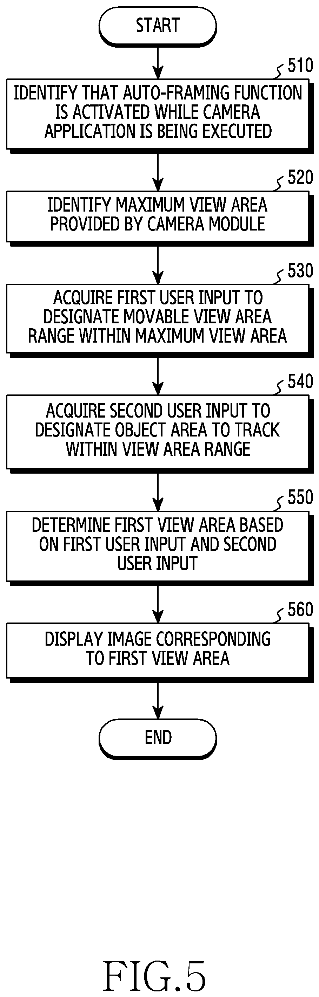

FIG. 5 is a flowchart illustrating an operation method of an electronic device according to an embodiment. According to an embodiment, the electronic device 300 may be a device that tracks a subject based on a view area range which is designated by a user within a maximum view area which may be acquired through a camera, and provides an image, and may correspond to the electronic device 101 shown in FIG. 1. Operations of FIG. 5 may be performed by at least one processor (for example, the processor 120 of FIG. 1 or the at least one processor 330 of FIG. 3) included in the electronic device 300.

Referring to FIG. 5, in operation 510, the electronic device 300 may identify that an auto-framing function is activated while a camera application is being executed. The electronic device 300 may identify whether the auto-framing function is activated, based on configuration information on a camera module (for example, the camera module 180 of FIG. 1 or the camera module 310 of FIG. 3).

According to an embodiment, in operation 520, in response to identifying that the auto-framing function is activated, the electronic device 300 may identify a maximum view area provided by the camera module 310. The maximum view area may correspond to a maximum field of view that may be provided through the camera module 310.

According to an embodiment, in operation 530, the electronic device 300 may acquire a first user input for designating a movable view area range within the maximum view area. The view area range may be understood as a range in which an object is detected within the maximum view area while photographing is being performed by using the camera module 310. The electronic device 300 may detect and continuously track an object while moving within the view area range designated based on the first user input. According to various embodiments, in operation 530, the electronic device 300 may recommend a view area range that may be designated within the maximum view area to the user. The electronic device 300 may determine a candidate view area range based on a result of analyzing a plurality of continuous frames which are acquired for a designated time through the camera module 310. For example, the electronic device 300 may detect one or more objects from the continuous frames, may determine the candidate view area range based on at least one of the number, positions, motions, or directions of the one or more objects, and may display the determined candidate view area range on a display (for example, the display module 160 of FIG. 1 or the display module 320 of FIG. 3). In this case, the electronic device 300 may determine the candidate view area range by applying a margin of a ratio that is designated with reference to an area and a direction in which the motion of the at least one object is detected. The margin may be applied differently according to characteristics of the at least one object detected within the maximum view area, and may be adjusted to maintain a photographing composition (for example, a photographing angle or a zoom magnification) set by the user within the maximum view area. According to various embodiments, when a plurality of objects are detected within the maximum view area, the electronic device 300 may determine the candidate view area range with reference to a direction of an object that has active motion or high importance among the plurality of objects. In another example, the at least one processor 330 may determine the candidate view area range to include all of the plurality of objects when the identified degrees of motion or importance of the plurality of objects are within the same or similar range. According to various embodiments, the electronic device 300 may provide a first user interface for designating at least part of the maximum view area as the view area range in order to induce the first user input. The first user interface may have a window box shape to set (or change) a range in horizontal directions and/or vertical directions within the maximum view area. The electronic device 300 may determine the view area range based on the first user input which is acquired through the first user interface. In an embodiment, the electronic device 300 may arrange and provide the first user interface on a position corresponding to the candidate area range which is determined based on analysis of the frame image. According to various embodiments, in operation 530, when it is identified that the view area range is not designated within the maximum view area by the user, the electronic device 300 may automatically designate the candidate view area range determined based on the analysis of the frame image as the view area range.

According to an embodiment, in operation 540, the electronic device 300 may acquire a second user input for designating an object area to track within the view area range. The object area may be an area that includes a target object to be continuously tracked within the view area range, and may be designated to include a peripheral part of the object in addition to the face or upper body of the object. According to various embodiments, in operation 540, the electronic device 300 may recommend an object area that may be designated within the view area range to the user. The electronic device 300 may determine at least one candidate object area, based on information on one or more objects detected within the view area range, or user preference information. For example, the electronic device 300 may determine, as a main object, an object that is designated by the user or an object that has a high frequency of appearance in images pre-stored in the memory 340, and may designate the at least one candidate object area with reference to the main object. In another example, the electronic device 300 may determine the main object, based on a type or a position of each of the detected one or more objects. In this case, the electronic device 300 may determine a person between the person and the animal as the main object, and, when a plurality of persons are detected, may determine, as the main object, a person positioned at the front (that is, a person closer to the electronic device 300), or a person whose motion is continuously detected. The electronic device 300 may designate the at least one candidate object area to include the determined main object. According to various embodiments, the electronic device 300 may provide a second user interface for setting a boundary of the object area within the view area range in order to induce the second user input. The second user interface may have a window box shape to set (or change) a range in horizontal directions and/or vertical directions within the view area range. The electronic device 300 may determine the object area based on the second user input which is acquired through the second user interface. In an embodiment, the electronic device 300 may arrange and provide the second user interface on a position corresponding to the candidate object area which is determined based on information on one or more objects within the view area range or user preference information. According to various embodiments, in operation 540, when it is identified that the object area is not designated within the view area range by the user, the electronic device 300 may automatically designate the candidate object area as the object area.

According to an embodiment, in operation 550, the electronic device 300 may determine a first view area to display on the display, based on the view area range which is designated by the first user input and the object area which is designated by the second user input. The electronic device 300 may determine the first view area to include the object area within the view area range. According to various embodiments, in operation 550, the electronic device 300 may determine the first view area by considering a zoom magnification on the object area. For example, the electronic device 300 may calculate a minimum zoom magnification based on the size of the maximum view area and the size of the view area range. In this case, the electronic device 300 may calculate the minimum zoom magnification by calculating a great value among values obtained by dividing the horizontal, vertical lengths of the maximum view area by the horizontal, vertical lengths of the view area range, and may determine the first view area to make the object area seen at a zoom magnification greater than or less than the calculated minimum zoom magnification. In another example, the electronic device 300 may acquire a magnification setting input including at least one of a minimum zoom magnification or maximum zoom magnification from the user. In this case, the electronic device 300 may determine the first view area to maintain the maximum zoom magnification or lower and/or the minimum zoom magnification or higher for the object area within the maximum view area based on the magnification setting input. According to various embodiments, when it is identified that a plurality of object areas are designated by the second user input, the electronic device 300 may determine the first view area to include all of the plurality of object areas. In this case, the first view area may be determined to maintain the minimum zoom magnification for the plurality of object areas.

According to an embodiment, in operation 560, the electronic device 300 may display an image corresponding to the first view area on the display 320. The electronic device 300 may provide the image corresponding to the first view area as a preview image of the running camera application, or may provide as a moving image screen. According to various embodiments, when it is identified that the object area is not included in the first view area while the image corresponding to the first view area is being provided, the electronic device 300 may detect the object area again within the view area range. The electronic device 300 may change the first view area based on the detected object area, and may display an image corresponding to the changed first view area on the display 320.

According to an embodiment, in operation 560, the electronic device 300 may detect a third user input for changing the object area while providing the image corresponding to the first view area. The electronic device 300 may determine a second view area based on the object area changed by the third user input, and may replace the image corresponding to the first view area with an image corresponding to the second view area and may provide the image through the display 320.

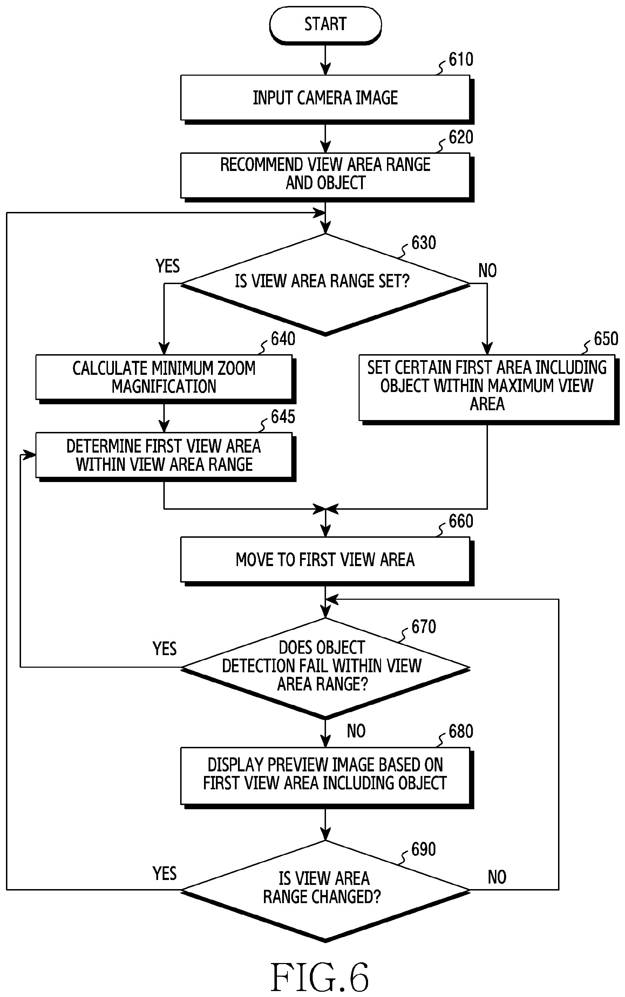

FIG. 6 is a flowchart to explain detailed operations of determining a view area range by an electronic device according to an embodiment. According to an embodiment, the electronic device 300 may be a device that determines a view area range which is movable for detecting and tracking an object within a maximum view area provided by using a camera, and may correspond to the electronic device 101 shown in FIG. 1. Operations of FIG. 6 may be performed by at least one processor (for example, the processor 120 of FIG. 1 or the at least one processor 330 of FIG. 3) included in the electronic device 300.

Referring to FIG. 6, in operation 610, the electronic device 300 may receive an input of a camera image. The electronic device 300 may display an image that is inputted through a camera module (for example, the camera module 180 of FIG. 1 or the camera module 310 of FIG. 3) on a display (for example, the display module 160 of FIG. 1 or the display 320 of FIG. 3) as a preview image.

According to an embodiment, in operation 620, the electronic device 300 may recommend a view area range that may be designated within a maximum view area, and a target object to be tracked. The electronic device 300 may determine a candidate view area range and a candidate object to recommend to the user by analyzing a plurality of continuous frames acquired for a designated time. According to various embodiments, in operation 620, the electronic device 300 may detect one or more objects whose motion is detected as a result of analyzing the plurality of continuous frames, and may determine the candidate object based on information on the one or more objects or user preference information. For example, when there is an object that is designated by the user or there is an object that appears in images pre-stored in a memory (for example, the memory 130 of FIG. 1 or the memory 340 of FIG. 3) more than a designated number of times, the electronic device 300 may determine the corresponding object as the candidate object. In another example, when it is identified that there is no object that is designated by the user or there is no object that appears more than the designated number of times, the electronic device 300 may determine the candidate object by considering a type or a position of each of the one or more objects. The electronic device 300 may determine a person between the person and the animal as the candidate object, and, when a plurality of persons are detected, the electronic device 300 may determine a person positioned at the front (that is, a person closer to the electronic device 300) as the candidate object. According to various embodiments, in operation 620, the electronic device 300 may determine the candidate view area range based on at least one of the number, positions, motions or directions of the one or more detected objects. The electronic device 300 may determine the candidate view area range by applying a margin of a ratio which is designated with reference to an area and a direction in which the motion of the at least one object is detected. The margin may be applied differently according to characteristics of the at least one object detected within the maximum view area. The electronic device 300 may display the determined candidate object and the candidate view area range on the display 320, and may recommend as the object to track and the view area range.

According to an embodiment, in operation 630, the electronic device 300 may determine whether a view area range is set within the maximum view area by the user. The electronic device 300 may identify whether the view area range is set according to whether a touch input of the user for designating the view area range within the maximum view area is detected.

When the view area range is set by the user as a result of identifying in operation 630 (operation 630-Yes), the electronic device 00 may calculate a minimum zoom magnification in operation 640. For example, the electronic device 300 may calculate a great value among values that are obtained by dividing horizontal, vertical lengths of the maximum view area by horizontal, vertical lengths of the view area range, as the minimum zoom magnification. In another example, the electronic device 300 may identify at least one of a minimum zoom magnification or a maximum zoom magnification based on magnification configuration information inputted by the user. In operation 645, the electronic device 300 may determine a first view area including the object to track within the set view area range. The electronic device 300 may determine the first view area to make the object seen at a zoom magnification greater than or equal to the calculated minimum magnification, or may determine the first view area to maintain a zoom magnification between the identified minimum zoom magnification and maximum zoom magnification.

When the view area range is not set by the user as a result of identifying in operation 630 (operation 630-No), the electronic device 300 may determine a certain area that includes the object to track within the maximum view area as the first view area in operation 650. According to various embodiments, in operation 650, the electronic device 300 may determine the first view area to include the object based on the candidate view area range.

According to an embodiment, in operation 660, the electronic device 300 may move a focus and/or an angle of the camera module 310 to the determined first view area, and may provide an image corresponding to the first view area via the display 320.

According to an embodiment, in operation 670, the electronic device 300 may identify whether the object is continuously detected within the view area range while providing the image corresponding to the first view area. For example, when it is detected that the object deviates from the view area range, the electronic device 300 may determine that the electronic device 300 fails to detect (or track) the object.

When it is identified that the electronic device fails to detect the object within the view area range as a result of identifying in operation 670 (operation 670-Yes), the electronic device 300 may return to operation 645.

When it is identified that the object is continuously detected within the view area range as a result of identifying in operation 670 (operation 670-No), the electronic device 300 may display a preview image based on the first view area including the object in operation 680. According to various embodiments, when it is detected that a shape or a position is changed due to motion of the object while the preview image is being displayed, the electronic device 300 may change the first view area based on the shape or position changed for the object, and may provide an image corresponding to the changed first view as the preview image.

According to an embodiment, in operation 690, the electronic device 300 may identify whether the view area range is changed while providing the preview image corresponding to the first view area. When a user's touch input to change the view area range occurs or the target object to be tracked is changed, the electronic device 300 may determine that the view area range is changed. When the view area range is changed as a result of identifying in operation 690 (operation 690-Yes), the electronic device may return to operation 630. When the view area range is not changed as a result of identifying in operation 690 (operation 690-No), the electronic device may return to operation 670.

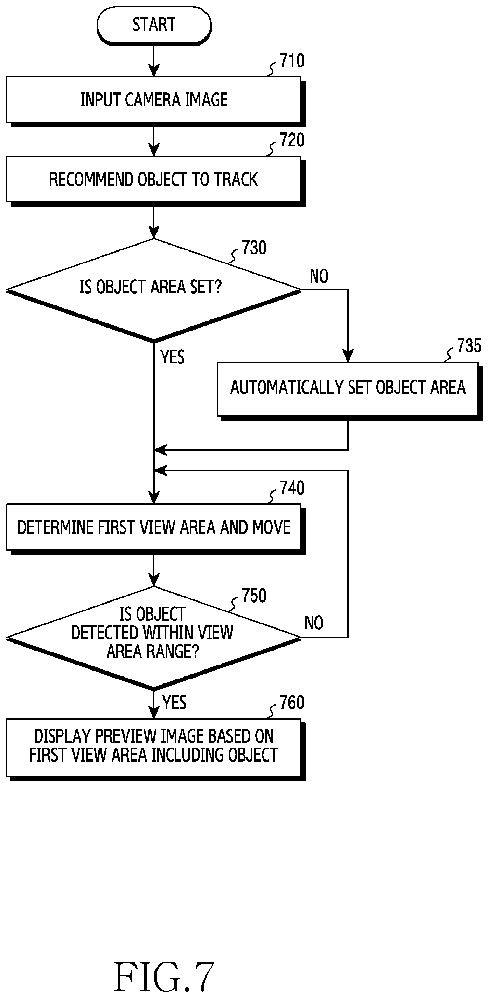

FIG. 7 is a flowchart illustrating detailed operations of determining an object area by an electronic device according to an embodiment. According to an embodiment, the electronic device 300 may be a device that continuously determines an area of an object to track while acquiring an image by using a camera, and may correspond to the electronic device 101 shown in FIG. 1. Operations of FIG. 7 may be performed by at least one processor (for example, the processor 120 of FIG. 1 or the at least one processor 330 of FIG. 3) included in the electronic device 300.

Referring to FIG. 7, in operation 710, the electronic device 300 may receive an input of a camera image. The electronic device 300 may display an image inputted through a camera module (for example, the camera module 180 of FIG. 1 or the camera module 310 of FIG. 3) on a display (for example, the display module 160 of FIG. 1 or the display 320 of FIG. 3) as a preview image.

According to an embodiment, in operation 720, the electronic device 300 may recommend a target object to track. The electronic device 300 may determine a candidate object to recommend to the user, based on a result of analyzing a plurality of continuous frames which are acquired for a designated time. According to various embodiments, in operation 720, the electronic device 300 may sort a background with a fixed position without movement and one or more objects with movement from the plurality of continuous frames, and may determine the candidate object based on information on the sorted one or more objects or user preference information. For example, when there is an object that is designated by the user or there is an object that appears in images pre-stored in a memory (for example, the memory 130 of FIG. 1 or the memory 340 of FIG. 3) more than a designated number of times, the electronic device 300 may determine the corresponding object as the candidate object. In another example, when it is identified that there is no object that is designated by the user or there is no object that appears more than the designated number of times, the electronic device 300 may determine the candidate object by considering a type or a position of each of the one or more objects. The electronic device 300 may determine a person between the person and the animal as the candidate object, and, when a plurality of persons are detected, may determine a person positioned at the front (that is, a person closer to the electronic device 300) as the candidate object.

According to an embodiment, in operation 730, the electronic device 300 may determine whether an object area that is a target to be tracked is set by the user. The electronic device 300 may determine whether the object area is set according to whether a touch input of the user for designating the object area is detected within the maximum view area.

When the object area is not set by the user as a result of identifying in operation 730 (operation 730-No), the electronic device 300 may automatically set a certain area including the object to track within the maximum view area as the object area in operation 735. According to various embodiments, in operation 735, the electronic device 300 may determine the object area with reference to the candidate object. The electronic device 300 may designate the object area by including a peripheral part of the object in addition to the face or upper body, the whole body of the candidate object. When the object area is set, the electronic device 300 may determine a first view area that is seen by the camera module 310 in operation 740. The electronic device 300 may determine the first view area to include the object area, and may move the focus and/or angle of the camera module 310 to the determined first view area and may provide an image corresponding to the first view area through the display 320.

When the object area is set by the user as a result of identifying in operation 730 (operation 730-Yes), the electronic device 300 may determine the first view area based on the object area which is set by the user in operation 740. The electronic device 300 may determine the first view area to include the object area set by the user, and may move the focus and/or angle of the camera module 310 to the determined first view area and may provide the image corresponding to the first view area through the display 320.

According to an embodiment, in operation 750, the electronic device 300 may determine whether the object area is continuously detected within the view area range while providing the image corresponding to the first view area. For example, when it is detected that the object area deviates from the view area range, the electronic device 300 may determine that the object area is not detected within the view area range.

When it is identified that the object area is not detected within the view area range as a result of identifying in operation 750 (operation 750-No), the electronic device 300 may return to operation 740 to determine the first view area again.

When it is identified that the object area is detected within the view area range as a result of identifying in operation 750 (operation 750-Yes), the electronic device 300 may provide the image corresponding to the first view area including the object area as a preview image in operation 760.

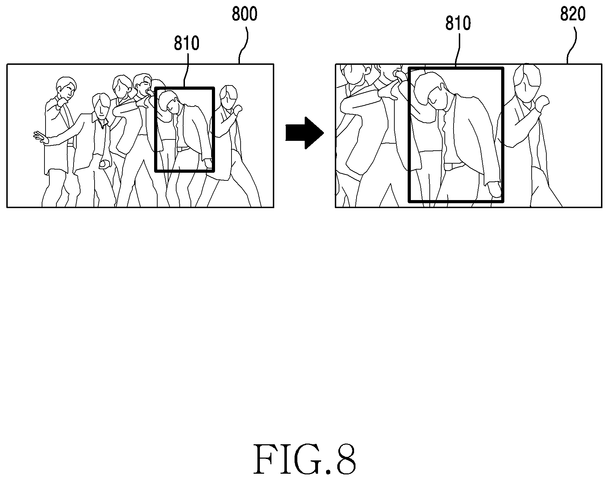

FIGS. 8, 9, 10 and 11 are views to explain a method for providing an image corresponding to a view area determined based on an object area according to an embodiment. According to various embodiments, the electronic device 300 may provide an image based on an object area designated by a user while photographing using a camera module (for example, the camera module 180 of FIG. 1 or the camera module 310 of FIG. 3).

Referring to FIG. 8, the electronic device 300 may determine an object area 810 to track in a maximum view area 800 which may be provided through the camera module. For example, the electronic device 300 may identify that the head and the upper body of a first object among a plurality of objects detected in the maximum view area are designated as the object area 810. The electronic device 300 may determine a view area 820 including the object area 810 by considering a size and/or a ratio of the object area 810 in order to provide an image of a composition giving stability. In FIG. 8, the electronic device 300 may identify that the vertical length (or height) of the designated object area 810 has a long ratio compared to the horizontal length (or width), and may determine the view area 820 to apply a margin of a greater ratio to the horizontal direction of the object area 810 than to the vertical direction.

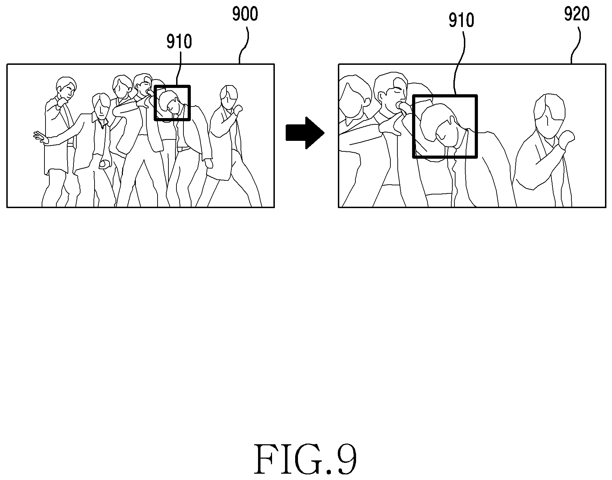

Referring to FIG. 9, the electronic device 300 may determine an object area 910 to track in a maximum view area 900 which may be provided through the camera module. For example, the electronic device 300 may identify that the head of the first object among the plurality of objects detected in the maximum view area is designated as the object area 910. In this case, the electronic device 300 may determine the view area 920 by applying a margin of a ratio which is set differently to the leftward/rightward/upward/downward directions of the head, respectively. The margin ratio may be pre-designated according to a type or a part of the object included in the object area 910.

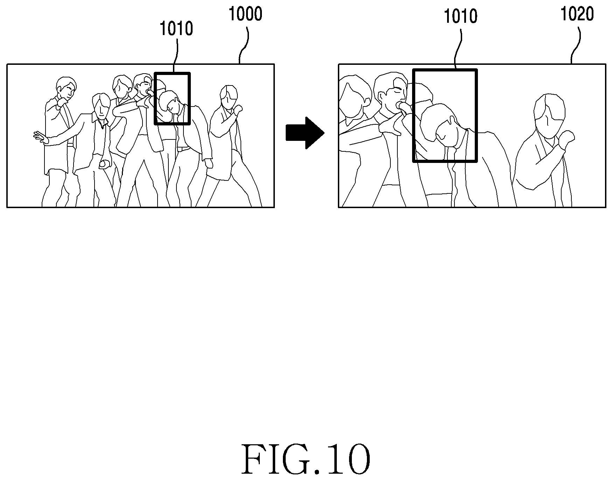

Referring to FIG. 10, the electronic device 300 may determine an object area 1010 to track in a maximum view area 1000 which may be provided through the camera module. For example, the electronic device 300 may identify that the head of the first object among the plurality of objects detected in the maximum view area, and an upper margin of the head are designated as the object area 1010. In this case, the electronic device 300 may determine the view area 1020 by applying a margin of a greater ratio to the downward direction of the object area 1010 than to the upward direction_by considering the upper margin included in the object area 1010.

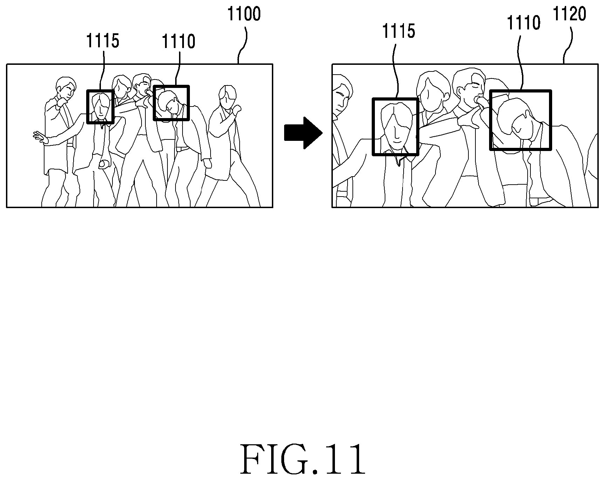

Referring to FIG. 11, the electronic device 300 may determine a plurality of object areas 1110, 1115 to track in a maximum view area 1100 which may be provided through the camera module. For example, the electronic device 300 may identify that the head of the first object among the plurality of objects detected in the maximum view area is designated as a first object area 1110, and a head of a second object is designated as a second object area 1115. In this case, the electronic device 300 may determine a view area 1120 to include both the first object area 1110 and the second object area 1115. According to various embodiments, the electronic device 300 may determine the view area 1120 by applying the margin of the same ratio to the rightward direction of the first object area 1110 and the leftward direction of the second object area 1115 in order to provide an image of a composition giving stability.

According to various embodiments, the electronic device 300 may determine the view area 820, 920, 1020, 1120 to maintain a zoom magnification setting which is designated by the user or a minimum zoom magnification which is calculated based on the sizes of the maximum view area and the view area range while providing an image corresponding to the view area 820, 920, 1020, 1120.

As shown in FIGS. 8 to 11, the electronic device 300 may determine the view area 820, 920, 1020, 1120 that is shown to the user differently according to the sizes, ratios, number of the object areas 810, 910, 1010, 1110, 1115 designated by the user while photographing by using the camera module.

According to an embodiment, an electronic device (for example, the electronic device 300) may include a camera module (for example, the camera module 310), a display (for example, the display 320), at least one processor (for example, the processor 330) operatively connected with the camera module and the display, and a memory (for example, the memory 340) operatively connected with the at least one processor, and the memory may store instructions that, when executed, cause the at least one processor to: identify a maximum view area that is provided by the camera module in response to identifying that an auto-framing function is activated while a camera application is being executed; acquire a first user input for designating a view area range that is movable within the maximum view area; acquire a second user input for designating an object area to track within the view area range; determine a first view area comprising the object area based on the first user input and the second user input; and display an image corresponding to the determined first view area on the display.

In an embodiment, the instructions may cause the at least one processor to: calculate a minimum zoom magnification on the first view area based on a size of the maximum view area and a size of the view area range; and determine the first view area based on the calculated minimum zoom magnification.

In an embodiment, the instructions may cause the at least one processor to: detect one or more objects from a plurality of continuous frames which are acquired for a designated time by using the camera module; determine a candidate view area range based on at least one of number, positions, motions or directions of the one or more objects; and display the determined candidate view area range on the display.

In an embodiment, the instructions may cause the at least one processor to: provide a first user interface to designate at least part of the maximum view area as the view area range, based on the candidate view area range; and determine the view area range based on the first user input which is acquired through the first user interface.

In an embodiment, the instructions may cause the at least one processor to: determine at least one candidate object area based on information on the one or more objects or user preference information; and to display the determined at least one candidate object area on the display.

In an embodiment, the instructions may cause the at least one processor to: provide a second user interface to set a boundary of the object area within the view area range, based on the determined at least one candidate object area; and determine the first view area based on the second user input which is acquired through the second user interface.

In an embodiment, the instructions may cause the at least one processor to: when it is identified that the object area is not included while displaying the image corresponding to the first view area on the display, detect the object area within the view area range; and change the first view area based on the detected object area, and display the changed first view area on the display.

In an embodiment, the instructions may cause the at least one processor to: acquire a third user input to change the object area within the view area range; determine a second view area based on the object area changed by the third user input; and display an image corresponding to the second view area on the display.

In an embodiment, the instructions may cause the at least one processor to, when it is identified that a plurality of object areas are designated by the second user input, determine the first view area to include all of the plurality of object areas.

In an embodiment, the instructions may cause the at least one processor to: acquire a magnification setting input including at least one of a minimum zoom magnification or a maximum zoom magnification from the user; and determine the first view area within the maximum view area based on the magnification setting input.

According to an embodiment, an operation method of an electronic device (for example, the electronic device 300) may include: identifying a maximum view area that is provided by a camera module of the electronic device in response to identifying that an auto-framing function is activated while a camera application is being executed; acquiring a first user input for designating a view area range that is movable within the maximum view area; acquiring a second user input for designating an object area to track within the view area range; determining a first view area including the object area based on the first user input and the second user input; and displaying an image corresponding to the determined first view area.

In an embodiment, determining the first view area may include: calculating a minimum zoom magnification on the first view area based on a size of the maximum view area and a size of the view area range; and determining the first view area based on the calculated minimum zoom magnification.

In an embodiment, acquiring the first user input may include: detecting one or more objects from a plurality of continuous frames which are acquired for a designated time by using the camera module; determining a candidate view area range based on at least one of number, positions, motions or directions of the one or more objects; and displaying the determined candidate view area range on a display of the electronic device.

In an embodiment, the operation method may further include: providing a first user interface to designate at least part of the maximum view area as the view area range, based on the candidate view area range; and determining the view area range based on the first user input which is acquired through the first user interface.

In an embodiment, acquiring the second user input may include: determining at least one candidate object area based on information on the one or more objects or user preference information, and displaying the determined at least one candidate object area on the display of the electronic device.

In an embodiment, the operation method may further include: providing a second user interface to set a boundary of the object area within the view area range, based on the at least one candidate object area; and determining the first view area based on the second user input which is acquired through the second user interface.

In an embodiment, determining the first view area may include: when it is identified that the object area is not included in the image while displaying the image corresponding to the first view area, detecting the object area within the view area range; and changing the first view area based on the detected object area, and displaying the changed first view area.

In an embodiment, the operation method may further include: acquiring a third user input to change the object area within the view area range; determining a second view area based on the object area changed by the third user input; and displaying an image corresponding to the second view area.

In an embodiment, determining the first view area may include, when it is identified that a plurality of object areas are designated by the second user input, determining the first view area to include all of the plurality of object areas.

In an embodiment, determining the first view area may include: acquiring a magnification setting input including at least one of a minimum zoom magnification or a maximum zoom magnification from the user; and determining the first view area within the maximum view area based on the magnification setting input.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a camera module;
a display;
at least one processor operatively connected with the camera module and the display; and
a memory operatively connected with the at least one processor,
wherein the memory stores instructions that, when executed, cause the at least one processor to:
identify a maximum view area that is provided by the camera module in response to identifying that an auto-framing function is activated while a camera application is being executed;
acquire a first user input for designating a view area range that is movable within the maximum view area;
acquire a second user input for designating an object area to track within the view area range;
determine a first view area comprising the object area based on the first user input and the second user input; and
display an image corresponding to the determined first view area on the display.

2. The electronic device of claim 1, wherein the instructions cause the at least one processor to:
calculate a minimum zoom magnification on the first view area based on a size of the maximum view area and a size of the view area range; and
determine the first view area based on the calculated minimum zoom magnification.

3. The electronic device of claim 1, wherein the instructions cause the at least one processor to:
detect one or more objects from a plurality of continuous frames which are acquired for a designated time by using the camera module;
determine a candidate view area range based on at least one of number, positions, motions or directions of the one or more objects; and
display the determined candidate view area range on the display.

4. The electronic device of claim 3, wherein the instructions cause the at least one processor to:
provide a first user interface to designate at least part of the maximum view area as the view area range, based on the candidate view area range; and
determine the view area range based on the first user input which is acquired through the first user interface.

5. The electronic device of claim 3, wherein the instructions cause the at least one processor to:
determine at least one candidate object area based on information on the one or more objects or user preference information;
provide a second user interface to set a boundary of the object area within the view area range, based on the determined at least one candidate object area; and
determine the first view area based on the second user input which is acquired through the second user interface.

6. The electronic device of claim 1, wherein the instructions cause the at least one processor to:
when it is identified that the object area is not included while displaying the image corresponding to the first view area on the display, detect the object area within the view area range; and
change the first view area based on the detected object area, and display the changed first view area on the display.

7. The electronic device of claim 1, wherein the instructions cause the at least one processor to:
acquire a third user input to change the object area within the view area range;
determine a second view area based on the object area changed by the third user input; and
display an image corresponding to the second view area on the display.

8. The electronic device of claim 1, wherein the instructions cause the at least one processor to, when it is identified that a plurality of object areas are designated by the second user input, determine the first view area to comprise all of the plurality of object areas.

9. The electronic device of claim 1, wherein the instructions cause the at least one processor to:
acquire a magnification setting input comprising at least one of a minimum zoom magnification or a maximum zoom magnification from the user; and
determine the first view area within the maximum view area based on the magnification setting input.

10. An operation method of an electronic device, the operation method comprising:
identifying a maximum view area that is provided by a camera module of the electronic device in response to identifying that an auto-framing function is activated while a camera application is being executed;
acquiring a first user input for designating a view area range that is movable within the maximum view area;
acquiring a second user input for designating an object area to track within the view area range;
determining a first view area comprising the object area based on the first user input and the second user input; and
displaying an image corresponding to the determined first view area.

11. The operation method of claim 10, wherein determining the first view area comprises:
calculating a minimum zoom magnification on the first view area based on a size of the maximum view area and a size of the view area range; and
determining the first view area based on the calculated minimum zoom magnification.

12. The operation method of claim 10, wherein acquiring the first user input comprises:
detecting one or more objects from a plurality of continuous frames which are acquired for a designated time by using the camera module;
determining a candidate view area range based on at least one of number, positions, motions or directions of the one or more objects; and
displaying the determined candidate view area range on a display of the electronic device.

13. The operation method of claim 10, wherein determining the first view area comprises:
when it is identified that the object area is not included in the image while displaying the image corresponding to the first view area, detecting the object area within the view area range; and
changing the first view area based on the detected object area, and displaying the changed first view area.

14. The operation method of claim 10, further comprising:
acquiring a third user input to change the object area within the view area range;
determining a second view area based on the object area changed by the third user input; and
displaying an image corresponding to the second view area.

15. The operation method of claim 10, wherein determining the first view area comprises, when it is identified that a plurality of object areas are designated by the second user input, determining the first view area to comprise all of the plurality of object areas.
